# EUROPEAN PATENT SPECIFICATION

(11) **EP 1 859 966 B1**
(45) Date of publication and mention of the grant of the patent: **09.09.2009**
(21) Application number: 06729249.0
(22) Date of filing: 16.03.2006
(51) Int. Cl.: B60C 19/08, B60C 11/00

(54) **PNEUMATIC TIRE**
LUFTREIFEN
PNEU

(30) Priority: 16.03.2005 JP 2005075643
(43) Date of publication of application: 28.11.2007
(73) Proprietor: Bridgestone Corporation, Tokyo 104-8340 (JP)
(72) Inventor: KIWAKI, Yukihiro, e, Chuo-ku, Tokyo 1048340 (JP)
(74) Representative: Whalley, Kevin
(86) International application number: PCT/JP2006/305256
(87) International publication number: WO 2006/098407

(56) References cited:
- EP-A- 0 798 142
- EP-A- 0 812 710
- EP-A- 0 838 353
- EP-A- 0 847 880
- EP-A- 1 175 992
- JP-A- 10 081 110
- JP-A- 11 048 711
- JP-A- 11 129 713
- JP-A- 62 283 001
- JP-A- 2000 085 316
- JP-A- 2002 210 843
- JP-A- 2004 306 769

## Description

### TECHNICAL FIELD

The present invention relates to a pneumatic tire having a conductive rubber layer arranged in a part of a tread portion mainly formed of foamed rubber.

### BACKGROUND ART

Conventionally, carbon black is used in general as a reinforcing agent for a tire. In recent years, improvement of fuel economy of an automobile is demanded to address environmental issues and reduction of rolling resistance of the tire has been challenged. In order to address the challenge, there has been developed tread rubber reducing blending amount of carbon black that causes a hysteresis loss and including silica as a reinforcing agent. By reducing the blending amount of carbon black while blending silica, the rolling resistance is reduced and braking force on a wet road surface (hereafter referred to as "wet performance") is enhanced. However, the tread rubber blended with silica has higher electrical resistance than tread rubber blended with carbon black only and builds up static electricity produced due to internal friction during deformation of rubber.

Moreover, foamed rubber may be used for tread rubber so as to improve on-ice performance in general in a studless tire as disclosed in Japanese Patent Application Laid-open No. 62-283001 and white filler may be further blended to improve the wet performance in some cases. Because the tire has insufficient conductivity in this case, a thin layer of high-conductivity rubber functioning as a ground for the static electricity building up in the tire is arranged in a tread portion as disclosed in Japanese Patent Application Laid-open No. 10-81110 and so-called non-foamed rubber having a foaming rate lower than 2 % is used as the conductive rubber.

However, because the non-foamed rubber has higher wear resistance than the foamed rubber in general, if the non-foamed rubber is used as the conductive rubber as described above, only the conductive rubber portion is left as the tread portion wears and uneven wear occurs between the non-foamed rubber and the foamed rubber.

Document EP-A-1 175 992 discloses a pneumatic tire having foamed rubber provided at a tread portion.

### DISCLOSURE OF THE INVENTION

### SUBJECT TO BE ADDRESSED BY THE INVENTION

With the above facts in view, it is an object of the present invention to improve uneven wear resistance in a tread portion in a pneumatic tire having a conductive rubber layer arranged in a part of the tread portion.

### MEASURES FOR ADDRESSING THE SUBJECT

According to an aspect of the present invention, there is provided a pneumatic tire having foamed rubber provided at a tread portion, wherein a foamed rubber conductive layer having a volume resistivity of 10¹⁰ Ω·cm or less and including no white filler is arranged at a part of a tread surface.

According to the above-described aspect, the foamed rubber is provided in the tread portion and the foamed rubber conductive layer employing the foamed rubber is arranged in a part of the tread surface. As a result, uneven wear of the tread portion is suppressed as compared with a case where non-foamed rubber is used as the conductive rubber.

If the volume resistivity of the foamed rubber conductive layer exceeds 10¹⁰ Ω·cm, static electricity charged in the tire cannot be sufficiently discharged to a contact road surface. Therefore, the volume resistivity of the foamed rubber conductive layer is preferably 10¹⁰ Ω·cm or less.

A foaming rate of the foamed rubber conductive layer is 2 % or more, for example.

In the above-described aspect, a foaming rate of the foamed rubber conductive layer may be equal to or greater than a foaming rate of the foamed rubber.

Normally, the conductive rubber including carbon filler has higher wear resistance than the tread rubber including white filler. However, in the pneumatic tire according to this aspect, the foaming rate of the foamed rubber conductive layer is set higher relative to the foaming rate of the foamed rubber and therefore it is possible to suppress uneven wear due to the difference of wear resistance between the foamed rubber conductive layer and other tread rubber.

In the above-described aspects, the foamed rubber conductive layer may be arranged in the form of a band in a tire peripheral direction.

In the pneumatic tire of this aspect, the foamed rubber conductive layer is arranged in the tire peripheral direction and therefore it is possible to suppress uneven wear between the foamed rubber conductive layer and other tread rubber in the tire peripheral direction.

In the above-described aspects, the tread portion may have a cap base structure including a cap portion on an outer side in a tire radial direction and a base portion on an inner side in a tire radial direction, non-foamed rubber is provided in the base portion, and the foamed rubber conductive layer is arranged in the cap portion and in contact with the base portion.

If low-conductivity foamed rubber is provided in the cap portion and high-conductivity non-foamed rubber (including carbon filler, for example) is provided in the base portion in the cap base structure, static electricity charged in a lower layer (on the center side in the tire radial direction) of the tread portion flows to the base portion but cannot flow to the tread surface due to existence of the low-conductivity cap portion (the outer periphery side in the tire radial direction) above the base portion and is not discharged to the contact road surface.

However, in the pneumatic tire of this aspect, because the foamed rubber conductive layer is arranged in the cap portion and the foamed rubber conductive layer is in contact with the base portion, the static electricity charged in the tire can flow from the base portion to the tread surface via the foamed rubber conductive layer and can be discharged to the contact road surface.

In the above-described aspects, the foamed rubber conductive layer may extend from the base portion toward the tread surface so as to be oblique in a tire width direction with respect to a direction perpendicular to the tread surface.

In the pneumatic tire of this aspect, the foamed rubber conductive layer in the tread portion extends not to be parallel to the direction perpendicular to the tread surface (the direction of the normal to the tread surface) but to be oblique in the tire width direction. As a result, the foamed rubber conductive layer in the tread portion occupies a certain area in the tire width direction when seen in a plan view of the tread surface and it is possible to suppress uneven wear due to difference of wear resistance between the foamed rubber conductive layer and other tread rubber in the tread portion.

### EFFECT OF THE INVENTION

As described above, according to the pneumatic tire of an aspect of the present invention, in the pneumatic tire having the conductive rubber arranged in a part of the tread portion, an excellent effect of improving uneven wear resistance in the tread portion can be obtained.

### BRIEF DESCRIPTION OF THE DRAWINGS

[FIG. 1] A cross-sectional view of a pneumatic tire in which a foamed rubber conductive layer extends in a radial direction of the tire
[FIG. 2] A cross-sectional view of a pneumatic tire in which a foamed rubber conductive layer extends to be oblique with respect to a tire radial direction.

### BEST MODES FOR CARRYING OUT THE INVENTION

Exemplary embodiments of the present invention will be described based on the drawings.

### [First Embodiment]

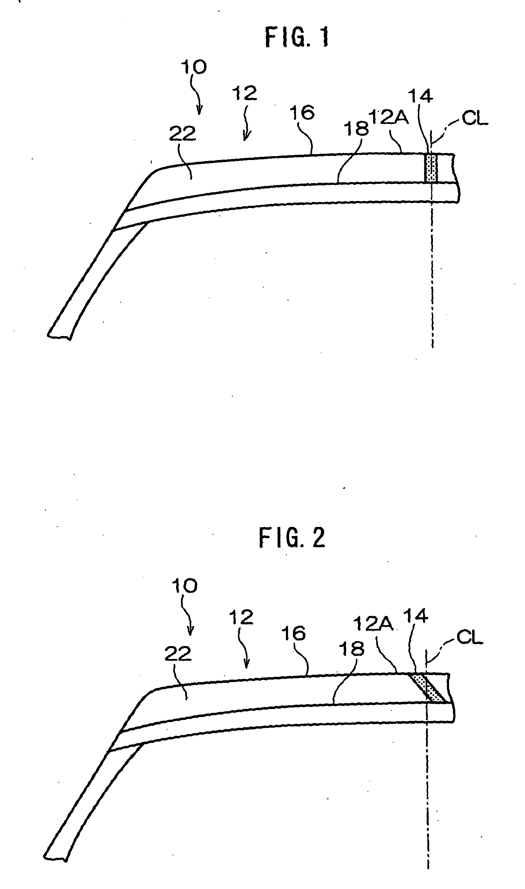

A tread portion 12 of a pneumatic tire 10 according to the present embodiment shown in FIG 1 has a so-called cap base structure in which a cap portion 16 forming a tread surface 12A side is laid over an outer periphery of a base portion 18 forming a tire radial inner side, and non-foamed rubber is provided in the base portion 18.

In the cap portion 16, foamed rubber in which 50 parts by weight or more of white filler is blended into 100 parts by weight of a rubber component of foamed rubber having a foaming rate of 2 % or more, for example, is provided. Filler including 90 % or more of white filler among the total amount of filler may be used, though the present invention is not limited thereto. As the white filler, silica, aluminum hydroxide, or the like may be used. The cap portion 16 has lower conductivity than rubber including 50 parts by weight or less of white filler.

Because the base portion 18 is made of the non-foamed rubber, it has higher rigidity than the cap portion 16. Moreover, because the base portion 18 includes carbon filler, it has high conductivity.

In the cap portion 16, a foamed rubber conductive layer 14 having volume resistivity of 10¹⁰ Ω·cm or less and including no white filler is arranged. By blending carbon filler, for example, into the foamed rubber conductive layer 14, the volume resistivity is reduced.

Here, the volume resistivity of the foamed rubber conductive layer 14 is set to be 10¹⁰ Ω·cm or less because static electricity charged in the pneumatic tire 10 cannot be sufficiently discharged to a contact road surface (not shown) if the volume resistivity exceeds 10¹⁰ Ω·cm.

The foamed rubber conductive layer 14 has a foaming rate of 2 % or more that is equal to or higher than a foaming rate of tread rubber 22 (foamed rubber) forming a part of the cap portion 16 excluding the foamed rubber conductive layer 14. To put it concretely, the foaming rate of the tread rubber 22 is 23 % while the foaming rate of the foamed rubber conductive layer 14 is 28 %.

The foamed rubber conductive layer 14 extends in a direction perpendicular to the tread surface 12A (a direction of the normal to the tread surface 12A) at a tire center CL and in the cap portion 16 and is arranged continuously in a tire peripheral direction. The foamed rubber conductive layer 14 is arranged so that its tire radial inner side is in contact with the base portion 18 and that its tire radial outer side is exposed at the tread surface 12A. A width of the foamed rubber conductive layer 14 in a tire axial direction is small and is preferably 0.5 to 3.0 mm. Arrangement of the foamed rubber conductive layer 14 is not limited to it. The foamed rubber conductive layer 14 does not have to be arranged at the tire center CL but may be arranged intermittently in the tire peripheral direction.

As a component of the foamed rubber used for the tread portion 12 including the foamed rubber conductive layer 14, a polymer having a glass transition temperature of -60°C or less, e.g., one of natural rubber, polyisoprene rubber, polybutadiene rubber, and butyl rubber, a mixture of two or more of them, or a mixture including 40 parts by weight or less of styrene-butadiene rubber including 30 % or less of styrene is preferable. By employing these polymers, the tread portion 12 can maintain sufficient rubber elasticity even at a low temperature.

An average cell diameter of closed cells of the foamed rubber is preferably 1 to 120 µm and more preferably 10 to 120 µm. Here, if the average cell diameter of the closed cells of the foamed rubber is smaller than 1 µm, flexibility of the foamed rubber at a low temperature, an effect of removing a water film between the tread and the road surface, and the like cannot be obtained. If the average cell diameter exceeds 120 µm, wear resistance is reduced, resilience of the foamed rubber to distortion is reduced, and so-called resistance to permanent set in fatigue is reduced. During manufacturing as well, it is difficult to obtain stable shapes due to reduction in a permanent setting performance.

The foaming rate of the foamed rubber is preferably in a range of 1 to 50 % and more preferably 2 to 50 %. If the foaming rate of the foamed rubber is lower than 1 %, on-ice performance is not improved. If the foaming rate exceeds 50 %, the wear resistance reduced, the resilience of the foamed rubber to distortion is reduced, and so-called resistance to permanent set in fatigue is reduced. Moreover, it is difficult to obtain stable shapes during manufacturing.

### (Operation)

In the pneumatic tire 10, the foamed rubber is provided in the tread rubber 22 of the tread portion 12 and the foamed rubber conductive layer 14 employing the foamed rubber is arranged in a part of the tread portion 12. As a result, it is possible to suppress uneven wear of the tread portion 12 that is a problem in a case where the non-foamed rubber is used for the conductive rubber.

More specifically, though the conductive rubber including the carbon filler normally has higher wear resistance than the tread rubber 22 including the white filler, the foaming rate of the foamed rubber conductive layer 14 is set higher relative to the tread rubber 22 and, as a result, it is possible to suppress uneven wear due to difference of wear resistance between the foamed rubber conductive layer 14 and other tread rubber 22.

If low-conductivity rubber is provided in the cap portion 16 and high-conductivity non-foamed rubber (including carbon filler, for example) is provided in the base portion 18 in the cap base structure, static electricity charged in a lower layer (on the center side in the tire radial direction) of the tread portion 12 flows to the base portion 18 but cannot flow to the tread surface 12A due to existence of the low-conductivity cap portion 16 (the outer periphery side in the tire radial direction) above the base portion 18 and is not discharged to the contact road surface.

However, because the foamed rubber conductive layer 14 is in contact with the high-conductivity base portion 18 and exposed at the tread surface 12A to thereby secure a discharge path in the pneumatic tire 10, the static electricity charged in the tire can flow from the base portion 18 to the tread surface 12A via the foamed rubber conductive layer 14 and can be discharged to the contact road surface.

### [Second Embodiment]

In FIG. 2, in a pneumatic tire 20 according to the present embodiment, a foamed rubber conductive layer 14 extends from a base portion 18 toward a tread surface 12A to be oblique with respect to a direction perpendicular to the tread surface 12A (a direction of the normal to the tread surface 12A) in a tire width direction.

Because other portions are the same as those in the first embodiment, the same portions are provided with the same reference numerals in the drawing to omit description of the portions.

### (Operation)

In the pneumatic tire 20, the foamed rubber conductive layer 14 in the tread portion 12 extends from the base portion 18 to the tread surface 12A not to be parallel to a direction perpendicular to the tread surface 12A (a direction of the normal to the tread surface 12A) but to be oblique in the tire width direction. As a result, the foamed rubber conductive layer 14 in the tread portion 12 occupies a certain area in the tire width direction when seen in a plan view of the tread surface 12A and it is possible to suppress uneven wear due to difference of wear resistance between the foamed rubber conductive layer 14 and other tread rubber 22. The effect of discharging the static electricity is the same as that in the first embodiment.

### (Test Example)

Under conditions shown in table 1, prototypes of pneumatic tires according to prior art and the embodiment were made and were tested for volume resistivity and a level of uneven wear.

A basic structure of each pneumatic tire was as shown in FIG. 1, a size of each tire was 195/65R15, a rim of 6J-15 was used, and internal pressure was 210kPa for each of front and rear wheels.

The volume resistivity for a tire was measured at three positions on a tire periphery, and evaluation was carried out based on the largest value thereof. The level of uneven wear was evaluated based on an average value of height differences between the foamed rubber conductive layer and the tread rubber on both sides of the conductive layer measured at nine positions on the tire periphery after mounting of the pneumatic tires to an actual vehicle and traveling for 10,000 km.

**[Table1]**

| | | Prior art | Example |
|---|---|---|---|
| Basic structure | | FIG 1 | ← |
| Tread rubber | Outer rubber layer | Rubber of foaming rate of 23%, 90 part of white filler | ← |
| | Inner rubber layer | Non-foamed | ← |
| | Conductive rubber layer | Non-foamed | Foaming rate:28 % |
| Volume resistivity (Ω·cm) | | 3.05×10⁶ | 2.38×10⁶ |
| Level of uneven wear (mm) | | 0.5 | 0.05 |

As shown in Table 1, it was confirmed from the test example that the level of uneven wear is substantially improved to 1/10 in the example while the example maintains an equivalent volume resistivity to the prior art. This is considered to be because the difference in wear resistance between the conductive rubber layer and the tread rubber is reduced by using the foamed rubber for the conductive rubber layer.

### INDUSTRIAL APPLICABILITY

According to the pneumatic tire of an aspect of the invention, in the pneumatic tire having the conductive rubber arranged in a part of the tread portion, uneven wear due to difference of wear resistance between the conductive rubber and other tread rubber can be suppressed and the uneven wear resistance in the tread portion can be improved by setting the foaming rate of the conductive rubber higher relative to other tread rubber.

### DESCRIPTION OF REFERENCE NUMERALS

- 10: pneumatic tire
- 12: tread portion
- 14: foamed rubber conductive layer
- 18: base portion
- 20: pneumatic tire
- 22: tread rubber

## Claims

1. A pneumatic tire having foamed rubber provided at a tread portion (12),
**characterised by** a foamed rubber conductive layer (14) having a volume resistivity of 10¹⁰ Ω·cm or less and including no white filler is arranged at a part of a tread surface.

2. The pneumatic tire according to claim 1, wherein a foaming rate of the foamed rubber conductive layer (14) is equal to or greater than a foaming rate of the foamed rubber.

3. The pneumatic tire according to claim 1 or 2, wherein the foamed rubber conductive layer (14) is arranged in the form of a band in a tire peripheral direction.

4. The pneumatic tire according any one of claims 1 to 3, wherein the tread portion (12) has a cap base structure including a cap portion (18) on an outer side in a tire radial direction and a base portion (18) on an inner side in a tire radial direction, non-foamed rubber is provided in the base portion (18), and the foamed rubber conductive layer (14) is arranged in the cap portion (16) and in contact with the base portion (18).

5. The pneumatic tire according to claim 4, wherein the foamed rubber conductive layer (14) extends from the base portion (18) toward the tread surface so as to be oblique in a tire width direction with respect to a direction perpendicular to the tread surface.

## Patentansprüche

1. Luftreifen mit an einem Laufflächenabschnitt (12) vorgesehenem geschäumten Gummi,
**dadurch gekennzeichnet, daß** eine leitfähige Schicht aus geschäumtem Gummi (14) mit einem spezifischen Volumenwiderstand von höchstens 10¹⁰ Ω·cm, die keinen weißen Füllstoff enthält, an einem Teil einer Lauffläche angeordnet ist.

2. Luftreifen nach Anspruch 1, wobei ein Aufschäumverhältnis der leitfähigen Schicht aus geschäumtem Gummi (14) größer oder gleich einem Aufschäumverhältnis des geschäumten Gummis ist.

3. Luftreifen nach Anspruch 1 oder 2, wobei die leitfähige Schicht aus geschäumtem Gummi (14) bandförmig in einer Umfangsrichtung des Reifens angeordnet ist.

4. Luftreifen nach einem der Ansprüche 1 bis 3, wobei der Laufflächenabschnitt (12) eine Kappe/Basis-Struktur mit einem Kappenabschnitt (16) an einer Außenseite in Radialrichtung des Reifens und einem Basisabschnitt (18) an einer Innenseite in Radialrichtung des Reifens aufweist, wobei im Basisabschnitt (18) nicht geschäumtes Gummi vorgesehen ist und im Kappenabschnitt (16) die leitfähige Schicht aus geschäumtem Gummi (14) im Kontakt mit dem Basisabschnitt (18) angeordnet ist.

5. Luftreifen nach Anspruch 4, wobei sich die leitfähige Schicht aus geschäumtem Gummi (14) vom Basisabschnitt (18) so zur Lauffläche erstreckt, daß sie in Breitenrichtung des Reifens schief zu einer zur Lauffläche senkrechten Richtung angeordnet ist.

## Revendications

1. Pneumatique ayant un caoutchouc alvéolaire fourni au niveau d'une partie de la bande de roulement (12), **caractérisé par** une couche conductrice en caoutchouc alvéolaire (14) ayant une résistivité volumique de 10¹⁰ Ω·cm ou moins, n'incluant aucune charge blanche et qui est disposée au niveau d'une partie d'une surface de la bande de roulement.

2. Pneumatique selon la revendication 1, dans lequel un taux d'expansion de la couche conductrice en caoutchouc alvéolaire (14) est égal ou supérieur à un taux d'expansion du caoutchouc alvéolaire.

3. Pneumatique selon la revendication 1 ou 2, dans lequel la couche conductrice en caoutchouc alvéolaire (14) est disposée sous la forme d'une bande dans un sens périphérique du pneu.

4. Pneumatique selon l'une quelconque des revendications 1 à 3, dans lequel la partie de la bande de roulement (12) a une structure cap/base (sommet/base), incluant une partie sommet (16) sur un côté externe dans un sens radial du pneu et une partie base (18) sur un côté interne dans un sens radial du pneu, du caoutchouc non alvéolaire est fourni dans la partie base (18), et la couche conductrice en caoutchouc alvéolaire (14) est disposée dans la partie sommet (16) et en contact avec la partie base (18).

5. Pneumatique selon la revendication 4, dans lequel la couche conductrice en caoutchouc alvéolaire (14) s'étend de la partie base (18) vers la surface de la bande de roulement afin d'être oblique dans un sens de la largeur du pneu par rapport à un sens perpendiculaire à la surface de la bande de roulement.
